# EUROPEAN PATENT APPLICATION

(11) **EP 4 589 924 A1**
(43) Date of publication of application: **23.07.2025**
(21) Application number: 23874258.9
(22) Date of filing: 30.06.2023
(51) Int. Cl.: H04L 67/1095

(54) **INTERNET-OF-THINGS DEVICE MANAGEMENT METHOD BASED ON CLOUD COMPUTING TECHNOLOGY, AND PLATFORM**

(30) Priority: 08.10.2022 CN 202211223533; 14.11.2022 CN 202211424299
(71) Applicant: Huawei Cloud Computing Technologies Co., Ltd., Guiyang, Guizhou 550025 (CN)
(72) Inventor: TANG, Zhuozhang, Shenzhen, Guangdong 518129 (CN); HE, Kan, Shenzhen, Guangdong 518129 (CN); ZHOU, Sumin, Shenzhen, Guangdong 518129 (CN)
(74) Representative: Isarpatent
(86) International application number: PCT/CN2023/105357
(87) International publication number: WO 2024/074066

(57) **Abstract**

This application provides a cloud computing technology-based internet of things device management method and a platform. The method includes: An internet of things management platform provides a forwarding policy configuration interface, where the forwarding policy configuration interface is used for obtaining a forwarding permission policy configured by an internet of things application for at least one gateway device, and the forwarding permission policy indicates that the at least one gateway device has forwarding permission to perform data forwarding between at least one internet of things device and the internet of things management platform; and the internet of things management platform configures, according to the forwarding permission policy, the at least one gateway device to perform data forwarding between the at least one internet of things device and the internet of things management platform. In this way, data can be quickly synchronized in scenarios such as frequent changes of mobile devices and switchover between active and standby gateway devices, to reduce latency and improve data transmission reliability.

## Description

This application claims priority to Chinese Patent Application No. 202211223533.7, filed with the China National Intellectual Property Administration on October 8, 2022 and entitled "METHOD FOR DYNAMIC PROXY OF INTERNET OF THINGS DEVICE AND INTERNET OF THINGS PLATFORM", which is incorporated herein by reference in its entirety.

### TECHNICAL FIELD

This application relates to the internet of things field, and in particular, to a cloud computing technology-based internet of things device management method using dynamic proxy and an internet of things management platform that performs the method.

### BACKGROUND

Currently, an internet of things device and an internet of things management platform perform data transfer based on a strict hierarchical topological relationship between a gateway device and the internet of things device. However, the rigid topological relationship between the devices makes it difficult for the internet of things management platform to implement fast synchronization when handling scenarios such as frequent changes of mobile devices and switchover between active and standby gateway devices, due to slow update of the topological relationship between the devices and a heavy workload during device migration.

### SUMMARY

To resolve a problem in conventional technologies, embodiments of the present invention provide a cloud computing technology-based internet of things device management method and a platform, to effectively resolve a technical problem that, in an existing internet of things device management method, it is difficult to implement fast synchronization due to slow update of a device topological relationship and a heavy workload during device migration.

According to a first aspect, this application provides a cloud computing technology-based internet of things device management method. The method is applied to an internet of things management platform for managing infrastructure. The infrastructure includes at least one gateway device disposed in a target region. In view of this, the internet of things device management method includes the following steps: The internet of things management platform provides a forwarding policy configuration interface, where the forwarding policy configuration interface is used for a forwarding permission policy for the at least one gateway device, and the forwarding permission policy indicates that the at least one gateway device has forwarding permission to perform data forwarding between at least one internet of things device and the internet of things management platform; and further, the internet of things management platform configures, according to the forwarding permission policy, the at least one gateway device to perform data forwarding between the at least one internet of things device and the internet of things management platform.

Optionally, the forwarding permission policy may be obtained from and configured by an internet of things application, or may be configured by a tenant by directly logging in to the internet of things management platform.

In a solution provided in this application, the internet of things management platform configured to manage the infrastructure obtains the forwarding permission policy configured by the internet of things application for the at least one gateway device that is disposed in the target region. The forwarding permission policy enables the at least one gateway device to obtain permission to perform data forwarding between the internet of things management platform and the at least one internet of things device. Then, the internet of things management platform configures the at least one gateway device according to the forwarding permission policy, so that the gateway device forwards data of the internet of things device to the internet of things management platform according to the forwarding permission policy configured by the internet of things application. The at least one gateway device herein is an internet of things device that has a data forwarding capability, and permission such as a range and time within which the gateway device can act as a proxy for the internet of things device can be quickly changed by configuring the forwarding permission policy. This eliminates a need for slow device migration through topological relationship reconstruction actions such as unbinding and binding. In this way, a speed and efficiency of data synchronization between internet of things devices are increased.

With reference to the first aspect, in a possible implementation of the first aspect, the at least one gateway device includes a first gateway device and a second gateway device that are configured as a shared proxy group. The second gateway device is disposed in the target region. The forwarding permission policy indicates that the first gateway device has permission to perform data forwarding between the at least one internet of things device and the internet of things management platform and indicates that the second gateway device has permission to perform data forwarding between the at least one internet of things device and the internet of things management platform. The internet of things device management method further includes the following steps: The internet of things management platform configures, according to the forwarding permission policy, the first gateway device to perform data forwarding between the at least one internet of things device and the internet of things management platform, and the internet of things management platform configures, according to the forwarding permission policy, the second gateway device to perform data forwarding between the at least one internet of things device and the internet of things management platform.

In the solution provided in this application, the internet of things management platform configures a plurality of gateway devices according to the forwarding permission policy, so that the plurality of gateway devices form a shared proxy group with the at least one internet of things device, and have permission to perform data forwarding between the at least one internet of things device and the internet of things management platform, so that two or more gateway devices are active at the same time, thereby improving data forwarding reliability.

With reference to the first aspect, in a possible implementation of the first aspect, the at least one gateway device includes a first gateway device and a second gateway device that are configured as an active-standby proxy group. The forwarding permission policy indicates that the first gateway device is an active forwarding device and indicates that the second gateway device is a standby forwarding device. Further, that the internet of things management platform configures, according to the forwarding permission policy, the at least one gateway device to perform data forwarding between the at least one internet of things device and the internet of things management platform is implemented in the following manner: The internet of things management platform configures, according to the forwarding permission policy, the first gateway device as the active forwarding device to perform data forwarding between the at least one internet of things device and the internet of things management platform, and the internet of things management platform configures, according to the forwarding permission policy, the second gateway device as the standby forwarding device to take over, when a failure occurs in the active forwarding device, data forwarding work that is performed by the active device before the failure occurs.

In the solution provided in this application, the internet of things management platform configures a plurality of gateway devices according to the forwarding permission policy, so that the plurality of gateway devices form an active-standby relationship, and each have permission to perform data forwarding between the at least one internet of things device and the internet of things management platform. When a failure occurs in an active gateway device, the internet of things management platform configures a standby gateway device to take over and forward data between the at least one internet of things device and the internet of things management platform, so as to implement quick switching between the active and standby gateway devices, and increase a data synchronization speed.

With reference to the first aspect, in a possible implementation of the first aspect, the forwarding permission policy further indicates a range attribute. In view of this, the internet of things device management method further includes the following step: The internet of things management platform configures, according to the forwarding permission policy, the first gateway device to perform data forwarding between a newly added internet of things device and the internet of things management platform when the at least one gateway device detects that the newly added internet of things device belongs to the range attribute.

In the solution provided in this application, the forwarding permission policy may indicate the range attribute. When the internet of things management platform configures the at least one gateway device to detect that the newly added internet of things device belongs to the range attribute indicated by the forwarding permission policy, the gateway device has permission to perform data forwarding between the newly added internet of things device and the internet of things management platform. The range attribute may be indicated by the forwarding permission policy. The gateway device can dynamically forward data of the internet of things device by detecting the range attribute of the newly added internet of things device. To implement data forwarding between the newly added internet of things device and the internet of things management platform, it is only required to configure the forwarding permission policy, eliminating a need to import all internet of things devices to the gateway device.

With reference to the first aspect, in a possible implementation of the first aspect, the at least one internet of things device also has the range attribute.

In the solution provided in this application, the range attribute of the internet of things device may also be indicated by the forwarding permission policy, and may be configured by using the internet of things application. The forwarding permission policy is configured by the internet of things management platform, so that convenient and efficient customized management of data forwarding permission of the gateway device can be implemented.

With reference to the first aspect, in a possible implementation of the first aspect, the range attribute is defined by one or any combination of the following: a product classification, a tag classification, resource space, a geographical region, and an IP address range.

In the solution provided in this application, the range attribute may be defined as one or any combination of range attributes such as a product classification, a tag classification, resource space, a geographical region, and an IP address range. This definition manner ensures diversity of the range attribute indicated by the forwarding permission policy configured by the internet of things application, and meets a requirement that different data forwarding permission needs to be configured for the gateway device based on different service requirements.

With reference to the first aspect, in a possible implementation of the first aspect, the internet of things device management method further includes the following steps: The internet of things management platform provides a device configuration interface. The device configuration interface is used for obtaining device information of the at least one gateway device and device information of the at least one internet of things device that are configured by the internet of things application. Further, the internet of things management platform registers the at least one gateway device with the internet of things management platform based on the device information of the at least one gateway device, registers the at least one internet of things device with the internet of things management platform based on the device information of the at least one internet of things device, and configures the at least one gateway device and the at least one internet of things device to be directly connected to the internet of things management platform.

In the solution provided in this application, both the gateway device and the internet of things device need to be directly connected to the internet of things management platform at the beginning of registration, and the internet of things management platform separately registers the gateway device and the internet of things device based on the obtained device information configured by the internet of things application.

With reference to the first aspect, in a possible implementation of the first aspect, the forwarding permission policy further indicates an authorized time limit. In view of this, the internet of things device management method further includes the following step: The internet of things management platform configures, according to the forwarding permission policy, the at least one gateway device to perform data forwarding between the at least one internet of things device and the internet of things management platform based on the authorized time limit.

In the solution provided in this application, introduction of the authorized time limit achieves comprehensive control of the forwarding permission policy in a space dimension and a time dimension. In terms of data forwarding security, strict control on forwarding permission of the gateway device is implemented in the foregoing implementation, so that the data forwarding security is further improved.

According to a second aspect, this application provides an internet of things management platform. The internet of things management platform is configured to manage infrastructure. The managed infrastructure includes at least one gateway device disposed in a target region. The internet of things management platform includes a forwarding policy configuration interface provision module, configured to provide a forwarding policy configuration interface. The forwarding policy configuration interface is used for obtaining a forwarding permission policy for the at least one gateway device. The forwarding permission policy herein indicates that the at least one gateway device has forwarding permission to perform data forwarding between at least one internet of things device and the internet of things management platform. The internet of things management platform further includes a forwarding permission policy configuration module, adapt to configure, according to the forwarding permission policy, the at least one gateway device to perform data forwarding between the at least one internet of things device and the internet of things management platform.

The second aspect or any implementation of the second aspect is an apparatus implementation corresponding to the first aspect or any implementation of the first aspect. The descriptions in the first aspect or any implementation of the first aspect are applicable to any one of the second aspect or the implementations of the second aspect. Details are not described herein again.

According to a third aspect, this application provides a computing device cluster, including at least one computing device. Each computing device includes a processor and a memory. The processor of the at least one computing device is configured to execute instructions stored in the memory of the at least one computing device, to enable the computing device cluster to perform the method according to any one of the first aspect and the implementations of the first aspect.

According to a fourth aspect, this application provides a computer program product including instructions. When the instructions are run by a computer device cluster, the computer device cluster is enabled to perform the method according to any one of the first aspect and the implementations of the first aspect.

According to a fifth aspect, this application provides a computer-readable storage medium, including computer program instructions. When the computer program instructions are executed by a computing device cluster, the computing device cluster performs the method according to any one of the first aspect and the implementations of the first aspect.

### BRIEF DESCRIPTION OF DRAWINGS

FIG. 1 is a diagram of an architecture of an internet of things management platform for internet of things device management based on a cloud computing technology according to an embodiment of the present invention;
FIG. 2 is a simple flowchart of a cloud computing technology-based internet of things device management method according to an embodiment of the present invention;
FIG. 3 is a schematic flowchart of a cloud computing technology-based internet of things device management method according to an embodiment of the present invention;
FIG. 4 is a diagram of an architecture of a cloud computing technology-based internet of things device management method according to an embodiment of the present invention;
FIG. 5 is a diagram of another architecture of a cloud computing technology-based internet of things device management method according to an embodiment of the present invention;
FIG. 6 is a flowchart of verifying a forwarding permission policy by an internet of things management platform based on a cloud computing technology according to an embodiment of the present invention;
FIG. 7 is a diagram of a structure of a computing device in a cloud computing technology-based internet of things device management method according to an embodiment of the present invention;
FIG. 8 is a diagram of a structure of a computing device cluster in a cloud computing technology-based internet of things device management method according to an embodiment of the present invention;
FIG. 9 is a diagram of another structure of a computing device cluster in a cloud computing technology-based internet of things device management method according to an embodiment of the present invention; and
FIG. 10 is a diagram of another structure of a computing device cluster in a cloud computing technology-based internet of things device management method according to an embodiment of the present invention.

### DESCRIPTION OF EMBODIMENTS

The following clearly and completely describes technical solutions in embodiments of the present invention with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

The phrase "embodiment" mentioned herein means that a specific feature, structure, or characteristic described in combination with the embodiment may be included in at least one embodiment of this application. The phrase shown in various locations in the specification does not necessarily refer to a same embodiment, and is not an independent or optional embodiment exclusive from another embodiment. It is explicitly and implicitly understood by a person skilled in the art that an embodiment described in the specification may be combined with another embodiment.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner.

Some terms and related technologies used in this application are first described with reference to the accompanying drawings, to help a person skilled in the art have a better understanding.

An internet of things (Internet of Things, IoT) is an internet that covers everything in the world and that is constructed by using technologies such as radio frequency identification (Radio Frequency Identification, RFID) and wireless data communication based on the computer internet.

An internet of things device refers to the "thing" in the internet of things, and is a device that connects a sensor network layer and a transport network layer in the internet of things and that collects data and sends data to a network layer. The internet of things device provides various functions such as data collection, initial processing, encryption, and transmission.

A gateway device mainly handles data collection and protocol conversion. The gateway device can implement protocol conversion between a sensor network and a communication network and between different types of sensor networks, to implement wide-area interconnection and local-area interconnection. The gateway device may also have a device management function. An operator may manage each sensor node at a bottom layer, learn related information of each node, and implement remote control by using an internet of things gateway device.

An internet of things management platform is a platform that manages device interconnection and provides device access, device communication management, device management, device data management, and other functions, to support application of the internet of things in various industries.

A domain-specific language (Domain-Specific Language, DSL) is a language that abstracts operations and concepts in a specific domain to resolve a domain-specific problem. For a specific domain, using a domain-specific language makes it convenient to describe a problem naturally and more efficient at resolving the problem than using a general-purpose programming language.

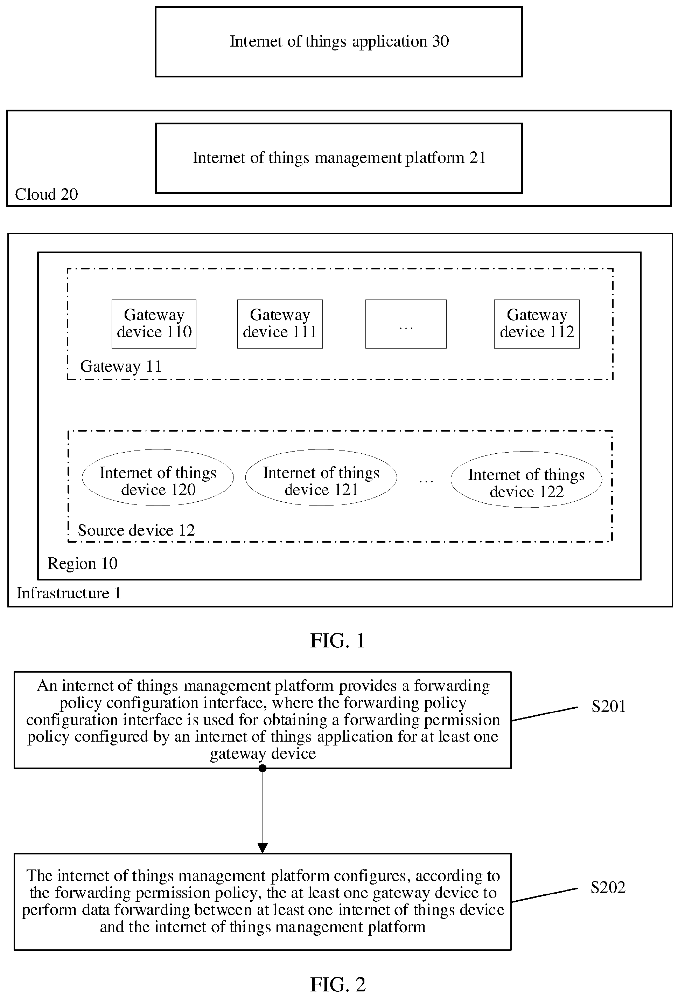

For ease of describing a cloud computing technology-based internet of things device management method according to embodiments of the present invention, first refer to FIG. 1 below. FIG. 1 is a diagram of an architecture of an internet of things management platform for cloud computing technology-based internet of things device management according to an embodiment of the present invention. As shown in FIG. 1, the internet of things management platform 21 is disposed in a cloud 20, and is configured to manage infrastructure 1. The infrastructure 1 includes a gateway device cluster gateway 11 and an internet of things device cluster source device 12 that are disposed in a target region 10. The gateway 11 includes at least one gateway device. For example, the at least one gateway device includes a gateway device 110, a gateway device 111, a gateway device 112, and the like, and is responsible for performing data forwarding between the source device 12 and the internet of things management platform 21. The source device 12 includes at least one internet of things device. For example, the at least one internet of things device includes an internet of things device 120, an internet of things device 121, an internet of things device 122, and the like.

It should be noted that an internet of things application in embodiments of the present invention may be an application (APP), an applet, a micro-application, or the like installed on various electronic devices, or may be a web page of an internet of things application accessed by another electronic device that can access an internet page. The electronic device described in embodiments may be a terminal device, for example, a mobile phone, a tablet computer, a personal digital assistant, a thin client, a personal computer, or an in-vehicle computer, or may be a portable electronic device, of which an embodiment includes but is not limited to a portable electronic device using or another operating system, or may be a desktop computer, a television (or a smart screen), a notebook computer, a smart air conditioner, a smart speaker, a room thermometer, a hygrometer, a humidity thermometer, a curtain remote control, a smart clock, a smart water heater, a smart camera apparatus, a smart lamp, a refrigerator, a power switch, an electric fan, a smart humidifier, an air purifier, or the like.

In addition, the internet of things management platform 21 may further access a public cloud data center, to use a computing capability of the public cloud data center to process data uploaded by the internet of things device, for example, to perform big data storage, model training, and encryption or decryption processing.

Optionally, the internet of things application 30 shown in FIG. 1 may alternatively be disposed in a virtual instance such as a virtual machine or a container in the public cloud data center.

In an internet of things device management scenario shown in FIG. 1, to implement a stable connection relationship, a stable topological relationship needs to be established between the gateway device and the internet of things device. However, due to the stable topological relationship, when a failure occurs in the gateway device and a standby gateway needs to take over work of the device in a timely manner, the standby gateway cannot take over data forwarding immediately because the internet of things device needs to be unbound and then re-bound. In addition, when the internet of things device changes dynamically, data cannot be forwarded in a timely manner because the topological relationship cannot be quickly updated, and management costs are high due to device migration.

To resolve the foregoing problem, this application provides a cloud computing technology-based internet of things device management method and a platform. The method is applied to an internet of things management platform. A forwarding permission policy configured by an internet of things application for at least one gateway device is obtained. The forwarding permission policy indicates that the at least one gateway device has forwarding permission to perform data forwarding between at least one internet of things device and the internet of things management platform. According to the method, the forwarding permission policy is configured, so that permission for the gateway device to perform data forwarding between the internet of things management platform and the internet of things device can be controlled. In this way, a topological relationship does not need to be changed by repeatedly binding and unbinding a device to meet a change of the internet of things device, and problems of excessively long change response time, slow information update, and low information security and reliability are resolved.

Based on the scenario described in FIG. 1, the following describes in detail the cloud computing technology-based internet of things device management method according to embodiments of the present invention.

Next, refer to FIG. 2. FIG. 2 is a simple flowchart of a cloud computing technology-based internet of things device management method according to an embodiment of the present invention. As shown in FIG. 2, the method includes but is not limited to the following steps.

S201: An internet of things management platform provides a forwarding policy configuration interface, used for obtaining a forwarding permission policy for at least one gateway device.

Specifically, the internet of things management platform 21 provides the interface for an internet of things application 30 to invoke, and obtains configuration information of the internet of things application 30. The internet of things management platform 21 provides the forwarding policy configuration interface, used for obtaining a forwarding permission policy 1 configured by the internet of things platform 30 for at least one of a gateway device 110, a gateway device 111, a gateway device 112, and the like. The forwarding permission policy 1 indicates that the gateway device has forwarding permission to perform data forwarding between the internet of things management platform 21 and at least one of an internet of things device 120, an internet of things device 121, an internet of things device 122, and the like.

The at least one gateway device is also a type of internet of things device, has data receiving and forwarding functions that another internet of things device does not have, and can implement protocol conversion between a sensor network and a communication network and between different types of sensor networks, to implement wide-area interconnection and local-area interconnection. The gateway device may also have a device management function. An operator may manage each sensor node at a bottom layer, learn related information of each node, and implement remote control by using an internet of things gateway device.

Optionally, the forwarding permission policy may be obtained from and configured by the internet of things application, or may be configured by a tenant by directly logging in to the internet of things management platform.

S202: The internet of things management platform configures, according to the forwarding permission policy, the at least one gateway device to perform data forwarding between the at least one internet of things device and the internet of things management platform.

For example, the internet of things management platform 21 delivers the forwarding permission policy 1 to the at least one of the gateway device 110, the gateway device 111, the gateway device 112, and the like, and configures the gateway device to perform data forwarding between the internet of things management platform and the internet of things device.

In this step, the gateway device has permission to perform data forwarding between the internet of things management platform and the internet of things device, and performs data forwarding according to the forwarding permission policy. If the data forwarding permission or a forwarding range between the gateway device and the internet of things device needs to be changed based on a scenario, it is only required to reconfigure the forwarding permission policy in the internet of things application, and then deliver a reconfigured forwarding permission policy to the gateway device through the internet of things management platform.

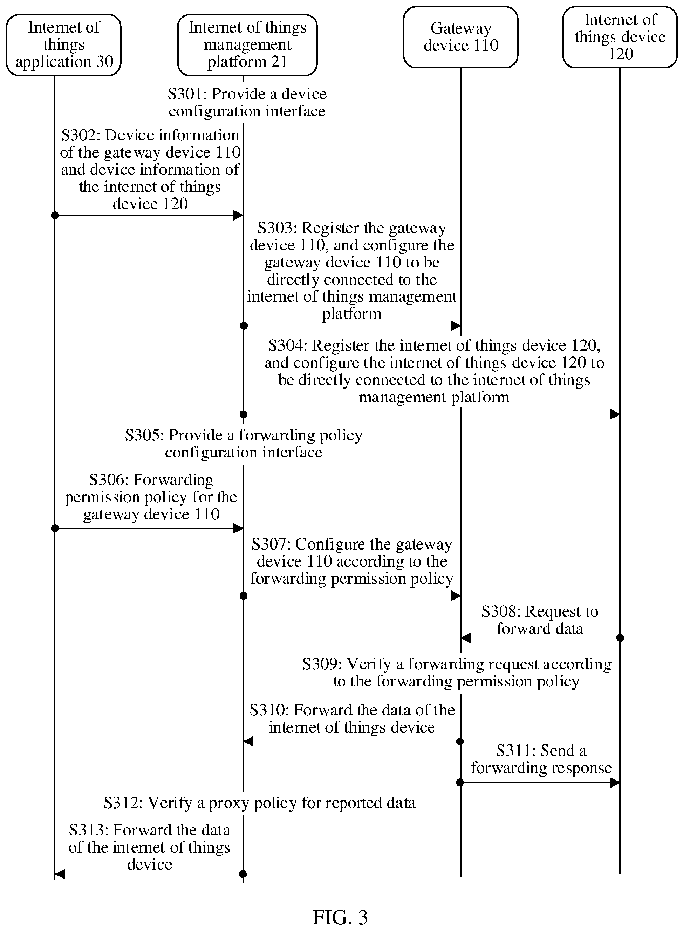

For further clear descriptions, refer to FIG. 3. FIG. 3 is a schematic flowchart of a cloud computing technology-based internet of things device management method according to an embodiment of the present invention.

Specifically, FIG. 3 provides further detailed descriptions for the internet of things device management method provided in FIG. 2. As shown in FIG. 3, the method includes the following steps.

Step S301: An internet of things management platform 21 provides a device configuration interface.

The internet of things management platform 21 provides the device configuration interface, and obtains, from an internet of things application 30 through the interface, configuration information of a gateway device 110 and configuration information of an internet of things device 120 that are configured by the internet of things application 30.

The device configuration interface may be an application programming interface (Application Programming Interface, API) or a configuration page provided on the internet, and a tenant remotely accesses the device configuration interface through a client such as a browser or a terminal device to input configuration information to the device configuration interface, or the internet of things application remotely accesses the device configuration interface to input configuration information to the device configuration interface.

Step S302: The internet of things management platform 21 obtains device information of the gateway device 110 and device information of the internet of things device 120 from the device configuration interface.

For example, the internet of things application 30 configures the device information of the gateway device 110 and the device information of the internet of things device 120, and provides the device information for the internet of things management platform 21 through the device configuration interface provided by the internet of things management platform 21.

Step S303: The internet of things management platform 21 registers the gateway device 110, and configures the gateway device 110 to be directly connected to the internet of things management platform 21.

The internet of things management platform 21 registers a corresponding gateway device with the internet of things management platform 21 based on the obtained device information of the gateway device 110 configured by the internet of things application 30, and configures the corresponding gateway device to be directly connected to the internet of things management platform 21.

Step S304: The internet of things management platform 21 registers the internet of things device 120, and configures the internet of things device 120 to be directly connected to the internet of things management platform 21.

The internet of things management platform 21 registers a corresponding internet of things device with the internet of things management platform 21 based on the obtained device information of the internet of things device 120 configured by the internet of things application 30, and configures the corresponding internet of things device to be directly connected to the internet of things management platform 21.

Step S305: The internet of things management platform 21 provides a forwarding policy configuration interface.

The internet of things management platform 21 provides the forwarding policy configuration interface, and the forwarding policy configuration interface is used for a forwarding permission policy for the gateway device 110.

Optionally, the forwarding policy configuration interface may be an application programming interface (Application Programming Interface, API) or a configuration page provided on the internet, and a tenant remotely accesses the forwarding policy configuration interface through a client such as a browser or a terminal device to input configuration information to the forwarding policy configuration interface, or the internet of things application remotely accesses the forwarding policy configuration interface to input configuration information to the forwarding policy configuration interface.

Step S306: The forwarding permission policy configured by the internet of things application 30 for the gateway device 110 is obtained by the internet of things management platform 21.

The forwarding permission policy configured by the internet of things application 30 for the gateway device 110 is obtained by the internet of things management platform 21. The forwarding permission policy indicates that the gateway device 110 has forwarding permission to perform data forwarding between at least one internet of things device and the internet of things management platform.

Step S307: The internet of things management platform 21 configures the gateway device 110 according to the forwarding permission policy.

The internet of things management platform 21 delivers the forwarding permission policy to the gateway device 110 according to the forwarding permission policy configured by the internet of things application 30, and configures, according to the permission policy, the gateway device 110 to perform data forwarding between the internet of things management platform 21 and the internet of things device 120.

Step S308: The internet of things device 120 requests the gateway device 110 to forward data.

The internet of things device 120 requests, according to a data forwarding command, the gateway device 110 to forward the data.

Step S309: The gateway device 110 verifies the forwarding request according to the forwarding permission policy.

The gateway device 110 determines, according to the forwarding permission policy, to forward, to the internet of things management platform 21, the data that the internet of things device 120 requests to forward.

Step S310: The gateway device 110 forwards, to the internet of things management platform 21, the data that the internet of things device 120 requests to forward.

The gateway device 110 determines, according to the forwarding permission policy, to forward, to the internet of things management platform 21, the data that the internet of things device 120 requests to forward.

Step S311: The gateway device 110 sends a forwarding response to the internet of things device 120.

After forwarding, to the internet of things management platform 21 according to the forwarding permission policy, the data that the internet of things device 120 requests to forward, the gateway device 110 sends the forwarding response to the internet of things device 120. The internet of things device 120 may stop, based on the response, sending a data forwarding request to another gateway device, to save gateway device resources.

In an embodiment of the present invention, the gateway device 110, a gateway device 111, a gateway device 112, and the internet of things device 120 are in a same target region. When the internet of things device 120 forwards data to the internet of things platform 21 based on a service requirement, the internet of things device 120 sends a data forwarding request to the gateway device 110. If the gateway device 110 determines, according to the forwarding permission policy, that the gateway device 110 does not have permission to forward the data that the internet of things device 120 requests to forward, the internet of things device 120 does not forward the data to the internet of things management platform 21; if the internet of things device 120 receives no forwarding response from the gateway platform 110 within a fixed time period, the internet of things device 120 sends a data forwarding request to the gateway device 111; and if the gateway device 111 determines, according to the forwarding permission policy, that the gateway device 111 has permission to forward the data that the internet of things device 120 requests to forward, after successfully forwarding the data to the internet of things management platform 21, the gateway device 111 sends a forwarding success response to the internet of things device 120, and the internet of things device 120 no longer sends a data forwarding request to the gateway device 112.

Step S312: The internet of things management platform 21 verifies a forwarding permission policy for data reported by the gateway device 110.

The internet of things management platform 21 verifies the forwarding permission policy for the data reported by the gateway device 110, to ensure that the gateway device 110 has permission to forward the data.

In an embodiment of the present invention, if the verification succeeds, the internet of things management platform 21 forwards the data of the internet of things device 120 to the internet of things application; or if the verification fails, the internet of things management platform 21 stops forwarding, and feeds back a verification status to the internet of things application in a timely manner, so that forwarding proxy permission of the gateway device 110 can be adjusted in a timely manner, to implement enhanced management on the forwarding permission of the gateway device and ensure data security.

Step S313: The internet of things management platform 21 forwards the data of the internet of things device 120 to the internet of things application 30.

After the forwarding permission policy for the gateway device 110 is successfully verified, the internet of things management platform 21 forwards the data of the internet of things device 120 to the internet of things application 30.

It should be noted that the forwarding policy configuration interface and the device configuration interface that are provided by the internet of things management platform are both specifically implemented as either of a configuration page and an application programming interface (Application Programming Interface, API).

In the foregoing cloud computing technology-based internet of things device management method, due to different forwarding permission policies configured by the internet of things application for gateway devices, the gateway devices also have different forwarding permission to perform data forwarding between the internet of things device and the internet of things management platform. When switchover between active and standby gateway devices is required for a different service scenario or due to a failure, it is only required to change, by using the internet of things application, a forwarding permission policy configured for a gateway device, and then the internet of things management platform configures and delivers a changed forwarding permission policy to implement quick switchover. In this way, service efficiency is improved, and data transmission reliability is greatly ensured.

On the basis of the internet of things device management method implemented in the foregoing process, an embodiment of the present invention further discloses a case in which at least one gateway device is set as a shared proxy group. For details, refer to the following descriptions.

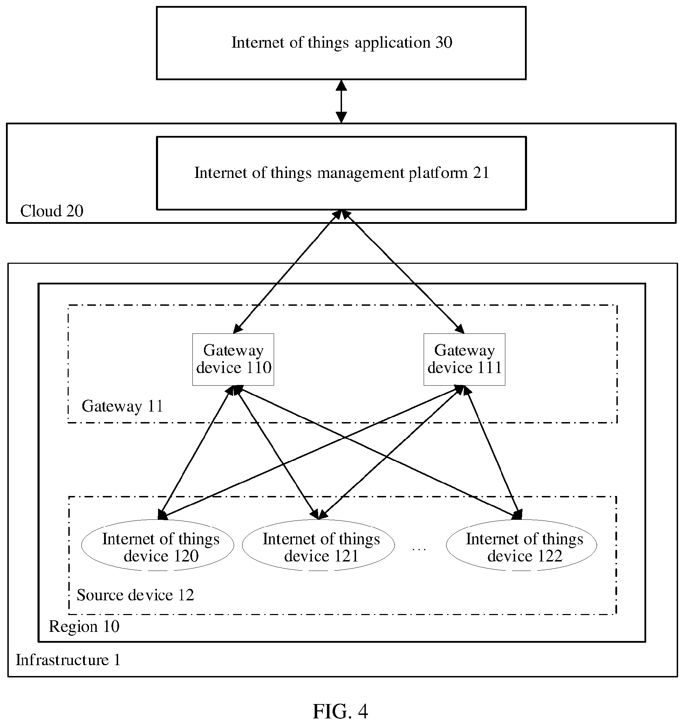

Refer to FIG. 4 below. FIG. 4 is a diagram of an architecture of a cloud computing technology-based internet of things device management method according to an embodiment of the present invention. As shown in FIG. 4, the method includes but is not limited to the following steps.

An internet of things management platform 21 registers a gateway device 110 and a gateway device 111 based on device information of the gateway device 110 and device information of the gateway device 111 that are configured by an internet of things application 30, and then registers corresponding internet of things devices based on device information of an internet of things device 120, device information of an internet of things device 121, device information of an internet of things device 122, and the like that are configured by the internet of things application 30. The gateway device 110, the gateway device 111, the internet of things device 120, the internet of things device 121, the internet of things device 122, and the like are all disposed in a target region 10. The internet of things application 30 configures that the gateway device 110 has forwarding permission to perform data forwarding between the internet of things management platform 21 and the internet of things device 120, the internet of things device 121, the internet of things device 122, and the like. The internet of things application 30 configures that the gateway device 111 has forwarding permission to perform data forwarding between the internet of things management platform 21 and the internet of things device 120, the internet of things device 121, the internet of things device 122, and the like. Both the gateway device 110 and the gateway device 111 have the forwarding permission to perform data forwarding between the internet of things management platform 21 and the internet of things device 120, the internet of things device 121, the internet of things device 122, and the like. When requesting, based on a service requirement, a gateway device to forward data, an internet of things device may request both the gateway device 110 and the gateway device 111 to forward the data, so that two or more gateway devices are active at the same time for the internet of things device and all have forwarding permission to perform data forwarding between the internet of things device and the internet of things management platform, thereby improving data transmission reliability.

Optionally, when all internet of things devices have a capability of forwarding data to each other, the internet of things management platform 21 configures, according to an obtained forwarding permission policy that is for the internet of things device 120, the internet of things device 121, the internet of things device 122, and the like and that is configured by the internet of things application 30, corresponding internet of things devices and the gateway device 110 and/or the gateway device 111 to form a shared group. In the shared group, when the internet of things device 120 encounters a failure and cannot forward data to the gateway device 110 and/or the gateway device 111, the internet of things device 120 may request, based on an indication of the forwarding permission policy, the internet of things device 121, the internet of things device 122, and the like to forward, to the gateway device 110 and/or the gateway device 111, the data that the internet of things device 120 requests to forward.

For example, in an on-board gateway application scenario, the internet of things management platform registers an on-board gateway A and an on-board gateway B based on device information of the on-board gateway A and device information of the on-board gateway B that are configured by the internet of things application, and registers an internet of things device, for example, a card reader, a gate, or a disinfector, based on device information of the internet of things device configured by the internet of things application. The internet of things application configures a forwarding permission policy to indicate that both the on-board gateway A and the on-board gateway B have permission to perform data forwarding between the internet of things device, for example, the card reader, the gate, or the disinfector, and the internet of things management platform. The internet of things management platform configures, according to the forwarding permission policy, the on-board gateway A and the on-board gateway B to perform data forwarding between the internet of things device, for example, the card reader, the gate, or the disinfector, and the internet of things management platform. The on-board gateway A and the on-board gateway B operate in an active-active or all-active manner. In this way, reliability of data that the internet of things device, for example, the card reader, the gate, or the disinfector, requests to forward is further enhanced.

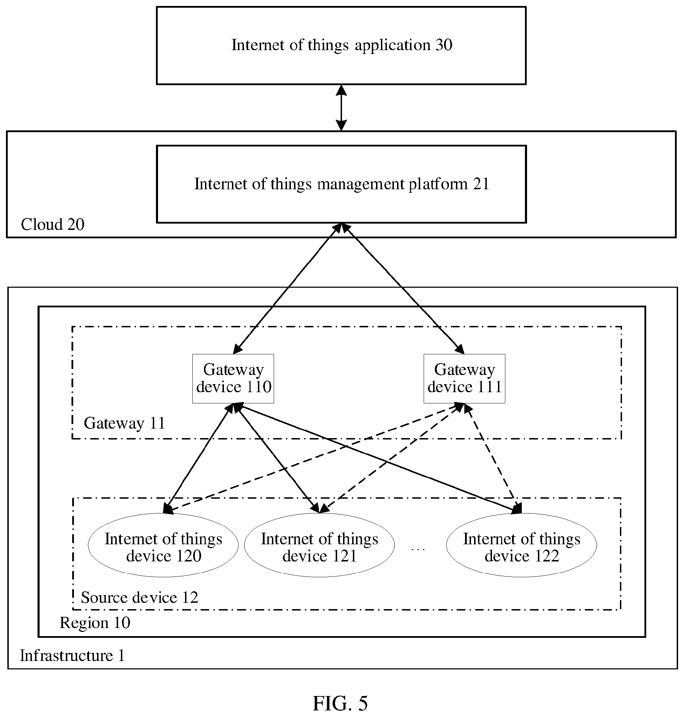

Another embodiment of the present invention further discloses a case in which at least one gateway device is set to form an active/standby proxy. FIG. 5 is a diagram of another architecture of a cloud computing technology-based internet of things device management method according to an embodiment of the present invention. The method includes but is not limited to the following steps.

An internet of things management platform 21 registers a gateway device 110 and a gateway device 111 based on device information of the gateway device 110 and device information of the gateway device 111 that are configured by an internet of things application 30, and then registers corresponding internet of things devices based on device information of an internet of things device 120, device information of an internet of things device 121, device information of an internet of things device 122, and the like that are configured by the internet of things application 30. The gateway device 110, the gateway device 111, the internet of things device 120, the internet of things device 121, the internet of things device 122, and the like are all disposed in a target region 10. The internet of things application 30 configures a forwarding permission policy that is for the gateway device 110 and the gateway device 111 and that indicates that the gateway device 110 is an active forwarding device and the gateway device 111 is a standby forwarding device. The internet of things management platform 21 configures, according to the forwarding permission policy, the gateway device 110 as the active forwarding device to perform data forwarding between the internet of things platform 21 and the internet of things device 120, the internet of things device 121, the internet of things device 122, and the like. The internet of things management platform 21 configures, according to the forwarding permission policy, the gateway device 111 as the standby forwarding device to take over, when a failure occurs in the gateway device 110 which is the active forwarding device, data forwarding work that is performed by the active device before the failure occurs. In other words, when a failure occurs in the gateway device 110, the gateway device 111 performs data forwarding between the internet of things platform 21 and the internet of things device 120, the internet of things device 121, the internet of things device 122, and the like.

For example, in another on-board gateway application scenario, the internet of things management platform registers an on-board gateway A and an on-board gateway B based on device information of the on-board gateway A and device information of the on-board gateway B that are configured by the internet of things application, and registers an internet of things device, for example, a card reader, a gate, or a disinfector, based on device information of the internet of things device configured by the internet of things application. The internet of things application configures a forwarding permission policy indicating that the on-board gateway A is used as an active forwarding device and the on-board gateway B is used as a standby forwarding device. The internet of things management platform configures, according to the forwarding permission policy, the on-board gateway A as the active forwarding device to perform data forwarding between at least one internet of things device and the internet of things management platform. The internet of things management platform configures, according to the forwarding permission policy, the on-board gateway B as the standby forwarding device to take over, when a failure occurs in the on-board gateway A, data forwarding work that is performed by the active gateway device before a failure occurs, that is, to perform data forwarding between the at least one internet of things device and the internet of things management platform.

Another embodiment of the present invention further discloses a case in which an internet of things management platform 21 configures, according to a forwarding permission policy for user-defined authorization, at least one gateway device to perform data forwarding between at least one internet of things device and the internet of things management platform.

The scenario in FIG. 1 is used as an example. The internet of things management platform 21 registers the at least one gateway device and the at least one internet of things device in a target region based on device information of the at least one gateway device and device information of the at least one internet of things device that are configured by an internet of things application 30. The internet of things application 30 configures the forwarding permission policy based on a user-defined authorization model. The internet of things management platform 21 configures, according to the forwarding permission policy, the at least one gateway device to perform data forwarding between the internet of things management platform and the at least one internet of things device.

For example, the user-defined authorization model may be set for an internet of things device for a specific feature domain and a specific purpose by using a domain-specific language (Domain-Specific Language, DSL). The internet of things management platform configures, based on an obtained DSL authorization model, the at least one gateway device to perform data transmission between the at least one internet of things device and the internet of things management platform. An advantage of using the DSL authorization model is that precise authorization control can be implemented on an internet of things device for a specific purpose, to facilitate permission management on a large quantity of internet of things devices in batches.

Another embodiment of the present invention further discloses a technical solution in which a forwarding permission policy indicates a range attribute. When an internet of things device continuously changes dynamically, an internet of things management platform configures, according to the forwarding permission policy, a gateway device to perform data forwarding between a newly added internet of things device and the internet of things management platform.

The scenario in FIG. 1 is used as an example. The internet of things management platform 21 registers at least one gateway device and at least one internet of things device in a target region based on device information of the at least one gateway device and device information of the at least one internet of things device that are configured by an internet of things application 30. The internet of things application 30 configures the forwarding permission policy to indicate the range attribute. The at least one internet of things device and the newly added internet of things device both have the range attribute. The internet of things platform configures, according to the forwarding permission policy, the at least one gateway device to perform data forwarding between the newly added internet of things device and the internet of things management platform 21 when detecting that the newly added internet of things device belongs to the range attribute of the forwarding permission policy.

For example, in an application scenario of a coal mining machine, the internet of things management platform registers a data collection gateway C based on device information of the data collection gateway C configured by the internet of things application, and then registers a corresponding internet of things device based on device information of an internet of things device, for example, a pressure monitor, a gas monitor, or a temperature monitor, configured by the internet of things application. In a working scenario, the data collection gateway C is disposed on the coal mining machine and moves forward along with a tunnel boring machine, and the internet of things device, for example, the pressure monitor, the gas monitor, or the temperature monitor, is fixedly mounted on a track or another stable apparatus. The range attribute indicated by the forwarding permission policy configured by internet of things application includes temperature, gas, humidity, and the like. During forward movement of the tunnel boring machine, if a range attribute of the newly added internet of things device detected by the data collection gateway C belongs to the range attribute indicated by the forwarding permission policy, the data collection gateway C has permission to perform data forwarding between the newly added internet of things device and the internet of things management platform; or if a range attribute of the newly added internet of things device does not belong to the range attribute indicated by the forwarding permission policy, the data collection gateway C does not have permission to perform data forwarding between the newly added internet of things device and the internet of things management platform. In this way, when a large quantity of internet of things devices of various types require data forwarding, the gateway device does not need to frequently convert a topological relationship, so that a latency loss is reduced.

Optionally, detection performed by the gateway device on the range attribute may also be applied to all internet of things devices, and the range attribute may be defined by one or any combination of the following: a product classification, a tag classification, resource space, a geographical region, and an IP address range, which may be combined, detailed, and extended to suit different tasks.

In addition, detection performed by the gateway device on the newly added internet of things device may also be implemented by using a DSL. The forwarding permission policy indicates the range attribute by using the DSL, and then the gateway device detects the range attribute of the newly added internet of things device to determine whether the gateway device has permission to perform data forwarding between the newly added internet of things device and the internet of things management platform.

Another embodiment of the present invention further discloses a technical solution in which a forwarding permission policy defines an authorized time limit.

FIG. 1 is used as an example. An internet of things management platform 21 registers a gateway device 110 and a gateway device 111 based on device information of the gateway device 110 and device information of the gateway device 111 that are configured by an internet of things application 30, and then registers corresponding internet of things devices based on device information of an internet of things device 120, device information of an internet of things device 121, device information of an internet of things device 122, and the like that are configured by the internet of things application 30. The gateway device 110, the gateway device 111, the internet of things device 120, the internet of things device 121, the internet of things device 122, and the like are all disposed in a target region 10. The internet of things application 30 configures the forwarding permission policy to indicate the authorized time limit. The internet of things management platform 21 configures the gateway device 110 and the gateway device 111 to perform data forwarding between the internet of things management platform 21 and the internet of things device 120, the internet of things device 121, the internet of things device 122, and the like based on the authorized time limit.

Further, when at least one gateway device forwards data of at least one internet of things device to the internet of things management platform according to the forwarding permission policy, the internet of things platform verifies proxy permission for the reported data. For details, refer to the following descriptions.

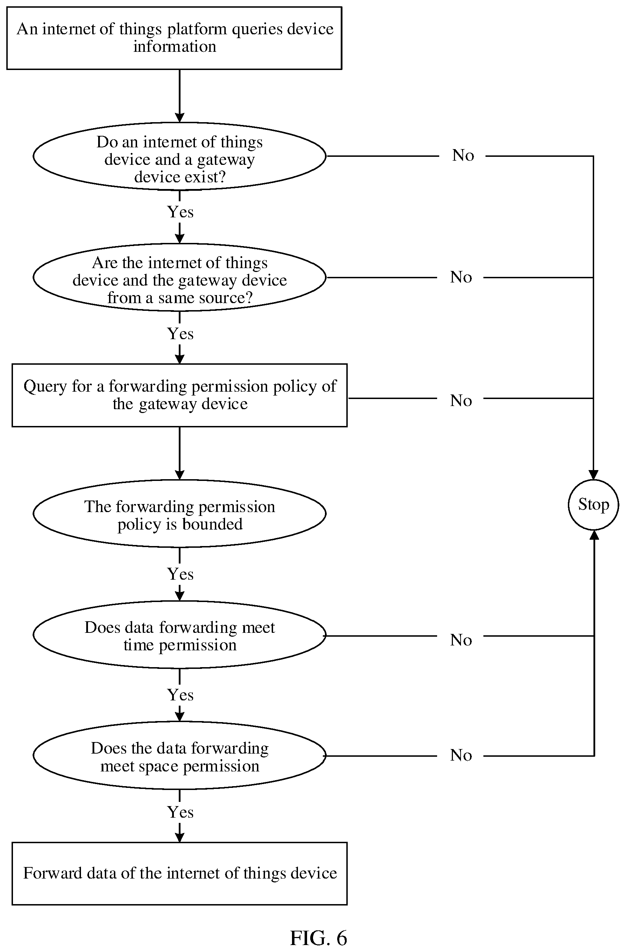

FIG. 6 is a flowchart of verifying a forwarding permission policy by an internet of things management platform based on a cloud computing technology according to an embodiment of the present invention.

At least one gateway device reports, to the internet of things management platform, data that at least one internet of things device requests to forward. The internet of things management platform queries device information of the gateway device and device information of the internet of things device, to determine whether the gateway device and the internet of things device exist. If the gateway device and the internet of things device do not exist, the internet of things management platform stops verification; or if the gateway device and the internet of things device exist, the internet of things management platform further determines whether the gateway device and the internet of things device are from a same source. If the gateway device and the internet of things device are from different sources, the internet of things management platform stops the verification; or if the gateway device and the internet of things device are from a same source, the internet of things management platform further queries for a forwarding permission policy for the gateway device. If the forwarding permission policy for the gateway device does not exist, the internet of things management platform stops the verification; or if the forwarding permission policy for the gateway device exists, the internet of things management platform further verifies whether the gateway device meets time permission of the forwarding permission policy. If the gateway device does not meet the time permission, the internet of things management platform stops the verification; or if the gateway device meets the time permission, the internet of things management platform further verifies whether the gateway device meets space permission of the forwarding permission policy. If the gateway device does not meet the space permission, the internet of things management platform stops the verification; or if the gateway device meets the space permission, the internet of things management platform forwards the data to an internet of things application.

It should be noted that "from a same source" in this embodiment of the present invention may mean "in a same physical region" or "in a same logical region". This is not limited in the present invention. The time permission in the foregoing embodiment refers to an authorized time limit. Data forwarding within the authorized time limit is allowed, and data forwarding beyond the authorized time limit is not allowed. The space permission in the foregoing embodiment refers to a range of internet of things devices covered by a range attribute, a shared proxy group, an active-standby proxy group, a DSL user-defined authorization model, and the like. Forwarding for an internet of things device within the range of the space permission is allowed, and forwarding for an internet of things device beyond the space permission range is not allowed. In addition, in the step of verifying the forwarding permission policy in this embodiment of the present invention, a sequence of verifying the time permission and the space permission is not limited in the present invention.

The following describes an electronic device provided in embodiments of this application, a user interface for such an electronic device, and embodiments for using such an electronic device. In some embodiments, the electronic device may be a portable electronic device that further includes other functions such as a personal digital assistant and/or a music player function, for example, a mobile phone, a tablet computer, or a video player. An example embodiment of the portable electronic device includes but is not limited to a portable electronic device using or another operating system. The portable electronic device may alternatively be another portable electronic device like a laptop (Laptop). It should be further understood that, in some other embodiments, the electronic device may alternatively not be a portable electronic device, but a desktop computer, a television (or a smart screen), a notebook computer, a smart air conditioner, a smart speaker, a room thermometer, a hygrometer, a humidity thermometer, a curtain remote control, a smart clock, a smart water heater, a smart camera apparatus, a smart lamp, a refrigerator, a power switch, an electric fan, a smart humidifier, an air purifier, or the like.

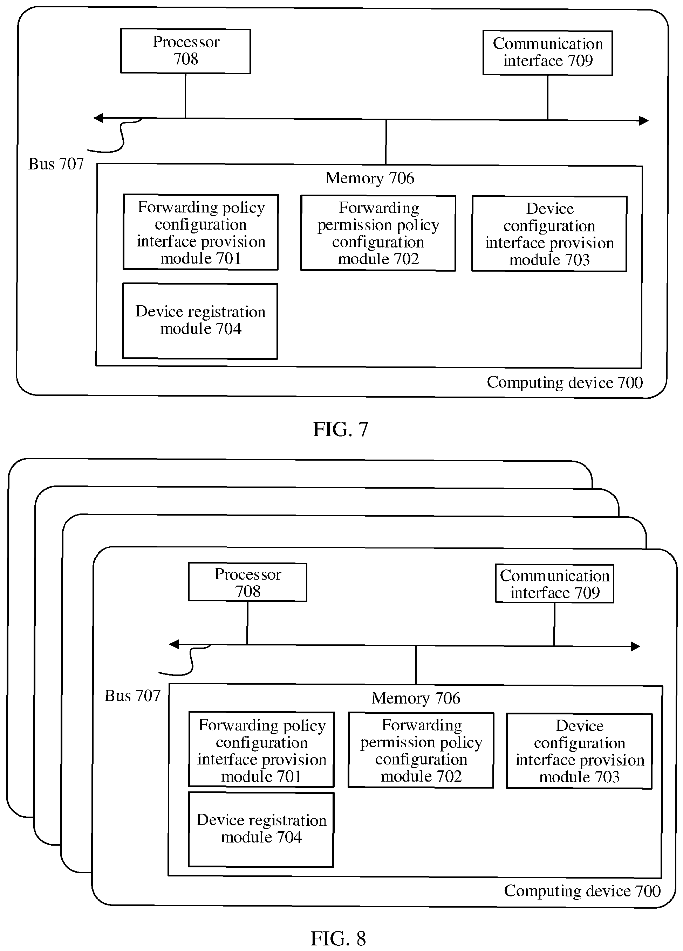

This application further provides an internet of things management platform. FIG. 7 is a diagram of a structure of a computing device in a cloud computing technology-based internet of things device management method according to an embodiment of the present invention. The computing device includes:
a forwarding policy configuration interface provision module 701, configured to provide a forwarding policy configuration interface, where the forwarding policy configuration interface is used for obtaining a forwarding permission policy configured by an internet of things application for at least one gateway device.
a forwarding permission policy configuration module 702, adapt to configure, according to the forwarding permission policy, the at least one gateway device to perform data forwarding between at least one internet of things device and the internet of things management platform;
further adapt to configure, according to the forwarding permission policy, the at least one gateway device to perform data forwarding between a newly added internet of things device and the internet of things management platform;
further adapt to configure, according to the forwarding permission policy, the at least one gateway device to perform data forwarding between the at least one internet of things device and the internet of things management platform based on an authorized time limit;
further adapt to configure, according to the forwarding permission policy, a first gateway device as an active forwarding device to perform data forwarding between the at least one internet of things device and the internet of things management platform; and
further adapt to configure, according to the forwarding permission policy, a second gateway device as a standby forwarding device to take over, when a failure occurs in the active forwarding device, data forwarding work that is performed by the active device before the failure occurs;
a device configuration interface provision module 703, configured to obtain device information of the at least one gateway device and device information of the at least one internet of things device that are configured by the internet of things application; and
a device registration module 704, configured to register the at least one gateway device and the at least one internet of things device with an internet of things infrastructure based on the device information of the at least one gateway device, and configure the at least one gateway device and the at least one internet of things device to be directly connected to the internet of things platform.

The forwarding policy configuration interface provision module, the forwarding permission policy configuration module, the device configuration interface provision module, and the device registration module may all be implemented by using software or hardware. For example, the following describes an implementation of the device configuration interface provision module by using the forwarding policy configuration interface provision module as an example. Similarly, for implementations of the forwarding permission policy configuration module, the device configuration interface provision module, and the device registration module, refer to the implementation of the forwarding policy configuration interface provision module.

In an example in which a module is a software functional unit, the forwarding policy configuration interface provision module may include code running on a compute instance. The compute instance may include at least one of a physical host (computing device), a virtual machine, and a container. Further, there may be one or more compute instances. For example, the forwarding policy configuration interface provision module may include code running on a plurality of hosts/virtual machines/containers. It should be noted that the plurality of hosts/virtual machines/containers used for running the code may be distributed in a same region, or may be distributed in different regions. Further, the plurality of hosts/virtual machines/containers used for running the code may be distributed in a same availability zone, or may be distributed in different availability zones. Each availability zone includes one data center or a plurality of data centers that are geographically close to each other. Generally, one region may include a plurality of availability zones.

In an example in which a module is a hardware functional unit, the forwarding policy configuration interface provision module may include at least one computing device, for example, a server. Alternatively, the forwarding policy configuration interface provision module may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

It should be noted that, in another embodiment, the forwarding policy configuration interface provision module may be configured to perform any step in a cloud computing technology-based internet of things device management method, the forwarding permission policy configuration module may be configured to perform any step in the cloud computing technology-based internet of things device management method, the device configuration interface provision module may be configured to perform any step in the cloud computing technology-based internet of things device management method, and the device registration module may be configured to perform any step in the cloud computing technology-based internet of things device management method. Steps implemented by the forwarding policy configuration interface provision module, the forwarding permission policy configuration module, the device configuration interface provision module, and the device registration module may be specified as required. The forwarding policy configuration interface provision module, the forwarding permission policy configuration module, the device configuration interface provision module, and the device registration module respectively implement different steps in the cloud computing technology-based internet of things device management method to implement all functions of the internet of things management platform.

The method and apparatus in embodiments of this application are described in detail above. To facilitate better implementation of the foregoing solutions in embodiments of this application, the following further provide related devices correspondingly to support the implementation of the foregoing solutions.

This application further provides a computing device. Refer to FIG. 7 below. FIG. 7 is a diagram of a structure of a computing device in a cloud computing technology-based internet of things device management method according to an embodiment of the present invention. The computing device 700 includes a bus 707, a processor 708, a memory 706, and a communication interface 709. The processor 708, the memory 706, and the communication interface 709 communicate with each other through the bus 707. The computing device 700 may be a server or a terminal device. It should be understood that quantities of processors and memories in the computing device 700 are not limited in this application.

The bus 707 may be a peripheral component interconnect (peripheral component interconnect, PCI) bus, an extended industry standard architecture (extended industry standard architecture, EISA) bus, and or the like. Buses may be classified into address buses, data buses, control buses, and the like. For ease of representation, only one line is used for representation in FIG. 7, but this does not mean that there is only one bus or only one type of bus. The bus 707 may include a path for information transmission between components (for example, the memory 706, the processor 708, and the communication interface 709) of the computing device 700.

The processor 708 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 708 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 706 stores executable program code. The processor 708 executes the executable program code to separately implement functions of a forwarding policy configuration interface provision module 701, a forwarding permission policy configuration module 702, a device configuration interface provision module 703, and a device registration module 704, so as to implement the cloud computing technology-based internet of things device management method. In other words, the memory 706 stores instructions used by the internet of things management platform to perform the cloud computing technology-based internet of things device management method.

The communication interface 709 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Refer to FIG. 8 below. FIG. 8 is a diagram of a structure of a computing device cluster in a cloud computing technology-based internet of things device management method according to an embodiment of this application. The computing device cluster includes at least one computing device 700. A memory or memories 706 in the one or more computing devices 700 in the computing device cluster may store a same instruction used by an internet of things management platform to perform the cloud computing technology-based internet of things device management method.

In some possible implementations, the one or more computing devices 700 in the computing device cluster may also be configured to execute part of instructions used by the internet of things management platform to perform the cloud computing technology-based internet of things device management method. In other words, a combination of the one or more computing devices 700 may jointly execute the instructions used by the internet of things management platform to perform the cloud computing technology-based internet of things device management method.

It should be noted that the memories 706 in different computing devices 700 in the computing device cluster may store different instructions, which are used for performing some functions of the internet of things management platform. To be specific, the instructions stored in the memories 706 in different computing devices 700 may implement functions of one or more of a forwarding policy configuration interface provision module 701, a forwarding permission policy configuration module 702, a device configuration interface provision module 703, and a device registration module 704.

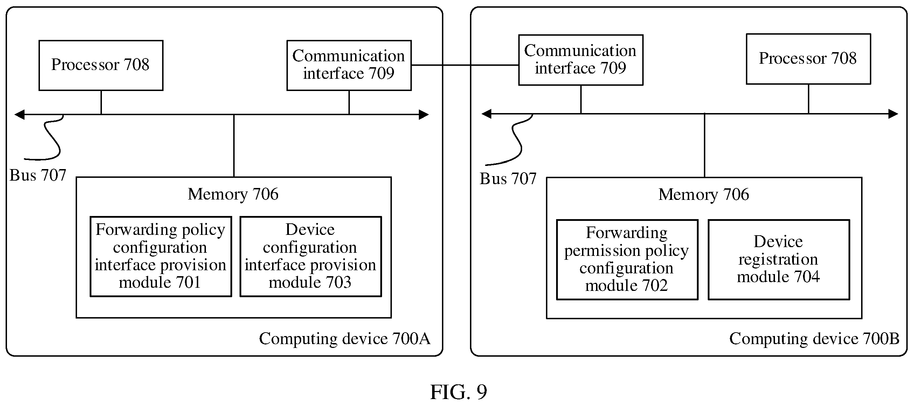

Refer to FIG. 9 below. FIG. 9 is a diagram of another structure of a computing device cluster in a cloud computing technology-based internet of things device management method according to an embodiment of this application. As shown in FIG. 9, two computing devices 700A and 700B are connected through a communication interface 709. A memory in the computing device 700A stores instructions for performing a forwarding policy configuration interface provision module 701 and a device configuration interface provision module 703. A memory in the computing device 700B stores instructions for performing functions of a forwarding permission policy configuration module 702 and a device registration module 704. In other words, the memory 706 of the computing device 700A and the memory 706 of the computing device 700B both store instructions used by the internet of things management platform to perform the cloud computing technology-based internet of things device management method.

Connection between computing device clusters shown in FIG. 9 may be implemented based on the following considerations: In the cloud computing technology-based internet of things device management method provided in this application, configuration information and a forwarding permission policy need to be obtained, and in addition, the forwarding permission policy needs to be configured, and a device needs to be registered based on configuration information. To balance computing workload of the forwarding permission policy configuration module 702 and the device registration module 704, and to avoid overloaded computing of the computing device 700A, functions implemented by the forwarding permission policy configuration module 702 and the device registration module 704 are assigned to the computing device 700B.

It should be understood that functions of the computing device 700A shown in FIG. 9 may alternatively be implemented by a plurality of computing devices 700. Similarly, functions of the computing device 700B may alternatively be implemented by a plurality of computing devices 700.

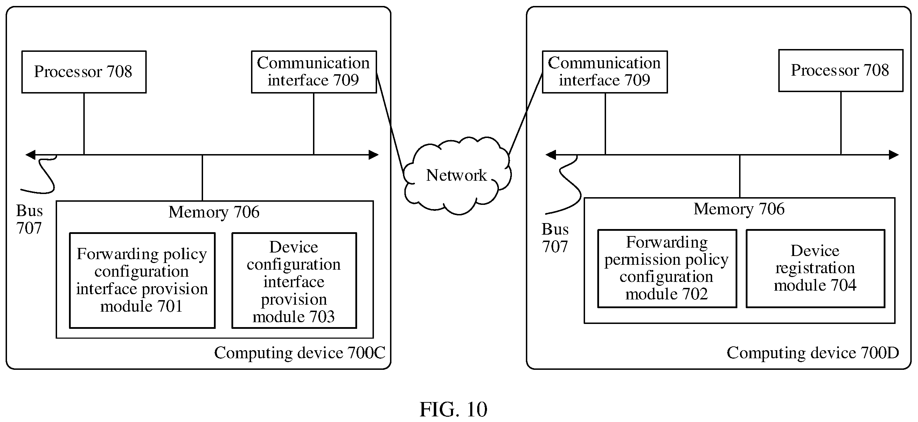

Refer to FIG. 10 below. FIG. 10 is a diagram of another structure of a computing device cluster in a cloud computing technology-based internet of things device management method according to an embodiment of this application. In some possible implementations, one or more computing devices in the computing device cluster may be connected through a network. The network may be a wide-area network, a local-area network, or the like. FIG. 10 shows a possible implementation. As shown in FIG. 10, two computing devices 700C and 700D are connected through a network. Specifically, each computing device is connected to the network through a communication interface of the computing device. In this possible implementation, a memory 706 in the computing device 700C stores instructions for executing functions of a forwarding policy configuration interface provision module 701 and a device configuration interface provision module 703. In addition, a memory 706 in the computing device 700D stores instructions for executing functions of a forwarding permission policy configuration module 702 and a device registration module 704.

Connection between computing device clusters shown in FIG. 10 may be implemented based on the following considerations: In the cloud computing technology-based internet of things device management method provided in this application, configuration of a gateway device needs to be performed frequently based on a change of a forwarding permission policy, and configuration information needs to be delivered frequently by using a communication interface to implement registration of an internet of things device. The foregoing two functions both require frequent delivery through the communication interface and involve intensive processing and computing. However, an interface providing module is usually for obtaining the configuration information and the forwarding permission policy. To achieve optimal storage and computing performance, it is considered to assign, to the computing device 700D, functions implemented by the forwarding permission policy configuration module 702 and the device registration module 704.

It should be understood that functions of the computing device 700C shown in FIG. 10 may alternatively be implemented by a plurality of computing devices 700. Similarly, functions of the computing device 700D may alternatively be implemented by a plurality of computing devices 700.

In some possible implementations, a memory or memories 706 in the one or more computing devices 700 in the computing device cluster may alternatively separately store part of instructions used to perform the cloud computing technology-based internet of things device management method. In other words, a combination of the one or more computing devices 700 may jointly execute the instructions used to perform the cloud computing technology-based internet of things device management method.

An embodiment of this application further provides a computer program product including instructions. The computer program product may be software or a program product that includes instructions and that can run on a computing device or be stored in any usable medium. When the computer program product runs on at least one computer device, the at least one computer device is enabled to perform a cloud computing technology-based internet of things device management method that is applied to an internet of things management platform.

An embodiments of this application further provides a computer-readable storage medium. The computer-readable storage medium may be any usable medium that can be used for storage by a computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform a cloud computing technology-based internet of things device management method that is applied to an internet of things management platform.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the protection scope of the technical solutions of embodiments of the present invention.

It may be clearly understood by a person skilled in the art that, for a detailed working process of the foregoing system, apparatus, and unit, refer to a corresponding process in the foregoing method embodiments, and details are not described herein again.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cloud computing technology-based internet of things device management method, wherein the method is applied to an internet of things management platform, the internet of things management platform is configured to manage infrastructure, the infrastructure comprises at least one gateway device disposed in a target region, and the method comprises:
Providing, by the internet of things management platform, a forwarding policy configuration interface, wherein the forwarding policy configuration interface is used for a forwarding permission policy for the at least one gateway device, and the forwarding permission policy indicates that the at least one gateway device has forwarding permission to perform data forwarding between at least one internet of things device and the internet of things management platform; and
Configuring, by the internet of things management platform according to the forwarding permission policy, the at least one gateway device to perform data forwarding between the at least one internet of things device and the internet of things management platform.

2. The method according to claim 1, wherein the at least one gateway device comprises a first gateway device and a second gateway device that are set as a shared proxy group, and the forwarding permission policy indicates that the first gateway device has permission to perform data forwarding between the at least one internet of things device and the internet of things management platform and indicates that the second gateway device has permission to perform data forwarding between the at least one internet of things device and the internet of things management platform; and the method further comprises:
configuring, by the internet of things management platform according to the forwarding permission policy, the first gateway device to perform data forwarding between the at least one internet of things device and the internet of things management platform; and
configuring, by the internet of things management platform according to the forwarding permission policy, the second gateway device to perform data forwarding between the at least one internet of things device and the internet of things management platform.

3. The method according to claim 1, wherein the at least one gateway device comprises a first gateway device and a second gateway device that are set as an active-standby proxy group, and the forwarding permission policy indicates that the first gateway device is an active forwarding device and indicates that the second gateway device is a standby forwarding device; and
the configuring, by the internet of things management platform according to the forwarding permission policy, the at least one gateway device to perform data forwarding between the at least one internet of things device and the internet of things management platform comprises:
configuring, by the internet of things management platform according to the forwarding permission policy, the first gateway device as the active forwarding device to perform data forwarding between the at least one internet of things device and the internet of things management platform; and
configuring, by the internet of things management platform according to the forwarding permission policy, the second gateway device as the standby forwarding device to take over, when a failure occurs in the active forwarding device, data forwarding work that is performed by the active device before the failure occurs.

4. The method according to any one of claims 1 to 3, wherein the forwarding permission policy further indicates a range attribute, and the method further comprises:
configuring, by the internet of things management platform according to the forwarding permission policy, the at least one gateway device to perform data forwarding between a newly added internet of things device and the internet of things management platform when detecting that the newly added internet of things device belongs to the range attribute.

5. The method according to claim 4, wherein the at least one internet of things device also has the range attribute.

6. The method according to claim 4 or 5, wherein the range attribute is defined by one or any combination of the following: a product classification, a tag classification, resource space, a geographical region, and an IP address range.

7. The method according to any one of claims 1 to 6, wherein the method further comprises:
providing, by the internet of things management platform, a device configuration interface, wherein the device configuration interface is used for obtaining device information of the at least one gateway device and device information of the at least one internet of things device that are configured by an internet of things application; and
registering, by the internet of things management platform, the at least one gateway device with the internet of things management platform based on the device information of the at least one gateway device, registering the at least one internet of things device with the internet of things management platform based on the device information of the at least one internet of things device, and configuring the at least one gateway device and the at least one internet of things device to be directly connected to the internet of things management platform.

8. The method according to any one of claims 1 to 7, wherein the forwarding permission policy further indicates an authorized time limit, and the method further comprises:
configuring, by the internet of things management platform according to the forwarding permission policy, the at least one gateway device to perform data forwarding between the at least one internet of things device and the internet of things management platform based on the authorized time limit.

9. An internet of things management platform, wherein the internet of things management platform is configured to manage infrastructure, the infrastructure comprises at least one gateway device disposed in a target region, and the internet of things management platform comprises:
a forwarding policy configuration interface provision module, configured to provide a forwarding policy configuration interface, wherein the forwarding policy configuration interface is used for obtaining a forwarding permission policy for the at least one gateway device, and the forwarding permission policy indicates that the at least one gateway device has forwarding permission to perform data forwarding between at least one internet of things device and the internet of things management platform; and
a forwarding permission policy configuration module, adapt to configure, according to the forwarding permission policy, the at least one gateway device to perform data forwarding between the at least one internet of things device and the internet of things management platform.

10. The internet of things management platform according to claim 1, wherein the at least one gateway device comprises a first gateway device and a second gateway device that are set as a shared proxy group, and the forwarding permission policy indicates that the first gateway device has permission to perform data forwarding between the at least one internet of things device and the internet of things management platform and indicates that the second gateway device has permission to perform data forwarding between the at least one internet of things device and the internet of things management platform;
the forwarding permission policy configuration module is further configured to configure, according to the forwarding permission policy, the first gateway device to perform data forwarding between the at least one internet of things device and the internet of things management platform; and
the forwarding permission policy configuration module is further adapt to configure, according to the forwarding permission policy, the second gateway device to perform data forwarding between the at least one internet of things device and the internet of things management platform.

11. The internet of things management platform according to claim 1, wherein the at least one gateway device comprises a first gateway device and a second gateway device that are set as an active-standby proxy group, and the forwarding permission policy indicates that the first gateway device is an active forwarding device and indicates that the second gateway device is a standby forwarding device; and
that the forwarding permission policy configuration module is adapt to configure, according to the forwarding permission policy, the at least one gateway device to perform data forwarding between the at least one internet of things device and the internet of things management platform comprises:
the forwarding permission policy configuration module is further adapt to configure, according to the forwarding permission policy, the first gateway device as the active forwarding device to perform data forwarding between the at least one internet of things device and the internet of things management platform; and
the forwarding permission policy configuration module is further adapt to configure, according to the forwarding permission policy, the second gateway device as the standby forwarding device to take over, when a failure occurs in the active forwarding device, data forwarding work that is performed by the active device before the failure occurs.

12. The internet of things management platform according to any one of claims 9 to 11, wherein the forwarding permission policy further indicates a range attribute, and
the forwarding permission policy configuration module is further adapt to configure, according to the forwarding permission policy, the at least one gateway device to perform data forwarding between a newly added internet of things device and the internet of things management platform when detecting that the newly added internet of things device belongs to the range attribute.

13. The internet of things management platform according to claim 12, wherein the at least one internet of things device also has the range attribute.

14. The internet of things management platform according to claim 12 or 13, wherein the range attribute is defined by one or any combination of the following: a product classification, a tag classification, resource space, a geographical region, and an IP address range.

15. The internet of things management platform according to any one of claims 9 to 14, wherein the internet of things management platform further comprises:
a device configuration interface provision module, configured to provide a device configuration interface, wherein the device configuration interface is used for obtaining device information of the at least one gateway device and device information of the at least one internet of things device that are configured by the internet of things application; and
a device registration module, configured to register the at least one gateway device with the internet of things management platform based on the device information of the at least one gateway device, register the at least one internet of things device with the internet of things management platform based on the device information of the at least one internet of things device, and configure the at least one gateway device and the at least one internet of things device to be directly connected to the internet of things management platform.

16. The internet of things management platform according to any one of claims 9 to 15, wherein the forwarding permission policy further indicates an authorized time limit, and
the forwarding permission policy configuration module is further adapt to configure, according to the forwarding permission policy, the at least one gateway device to perform data forwarding between the at least one internet of things device and the internet of things management platform based on the authorized time limit.

17. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 8.

18. A computer program product comprising instructions, wherein when the instructions are run by a computer device cluster, the computer device cluster is enabled to perform the method according to any one of claims 1 to 8.

19. A computer-readable storage medium, comprising computer program instructions, wherein when the computer program instructions are executed by a computing device cluster, the computing device cluster performs the method according to any one of claims 1 to 8.
